# EUROPEAN PATENT SPECIFICATION

(11) **EP 2 645 863 B1**
(45) Date of publication and mention of the grant of the patent: **24.01.2018**
(21) Application number: 11778901.6
(22) Date of filing: 04.11.2011
(51) Int. Cl.: A21C 11/00

(54) **MACHINE AND PROCESS FOR FOLDING AN EDIBLE DOUGH**
MASCHINE UND VERFAHREN ZUM FALTEN EINES ESSBAREN TEIGS
MACHINE ET PROCÉDÉ POUR PLIER UNE PÂTE COMESTIBLE

(30) Priority: 02.12.2010 IT MI20102229
(43) Date of publication of application: 09.10.2013
(73) Proprietor: Minipan S.r.l., 48024 Massa Lombarda RA (IT)
(72) Inventor: FUSARI, Franco, I-48012 Bagnacavallo (RA) (IT); BUFANO, Michele, I-48024 Massa Lombarda (RA) (IT); LANDI, Alessandro, I-48012 Bagnacavallo (RA) (IT)
(74) Representative: Modiano, Micaela Nadia
(86) International application number: PCT/EP2011/069466
(87) International publication number: WO 2012/072371

(56) References cited:
- EP-A1- 0 442 695
- FR-A5- 2 173 551
- NL-A- 8 300 815
- US-A- 6 126 977

## Description

The present invention concerns a machine for folding an edible kneading.

It is known that the bread-making process comprises the steps of fermenting/leavening and forming an edible kneading.

The fermenting/leavening step usually lasts about 8 hours and, by stretching the gluten fibres, allows a kneading to be obtained with a specific weight of about 0.4-0.5 kg per litre. The forming usually takes place by means of extrusion which subjects the kneading to a mechanical stress which substantially reduces the effect of the long fermentation, i.e. it twists the gluten fibres, thus creating complex gluten webs which are unfavourable to the development of internal porosities and to the volume increase (leavening) of the kneading: the result is an increase in the specific weight which reaches 0.8-0.9 kg/l. A subsequent step of lamination again reduces the specific weight, reactivating the leavening of the kneading.

It is known that the lower the specific weight, the better the leavening of the kneading, because the development of porosities favours the evaporation of water and the volume increase of the kneading.

NL 8 300 815 A discloses a machine according to the preamble of the appended claim 1, and US 6 126 977 A discloses a backing process according to the preamble of the appended claim 6.

The object of the present invention is to provide a machine adapted to form the kneading block, thus limiting the increase in specific weight and therefore favouring the leavening of the kneading.

In accordance with the invention, there is provided a machine for folding an edible kneading as defined in the appended claims 1-5, and an automatic baking process of an edible kneading as defined in the appended claim 6.

These and other features of the present invention will become more apparent from the following detailed description of a practical embodiment thereof, shown by way of non-limiting example in the accompanying drawings, in which:
figure 1 shows a front perspective view of a machine according to the present invention;
figure 2 shows a rear perspective view of the machine;

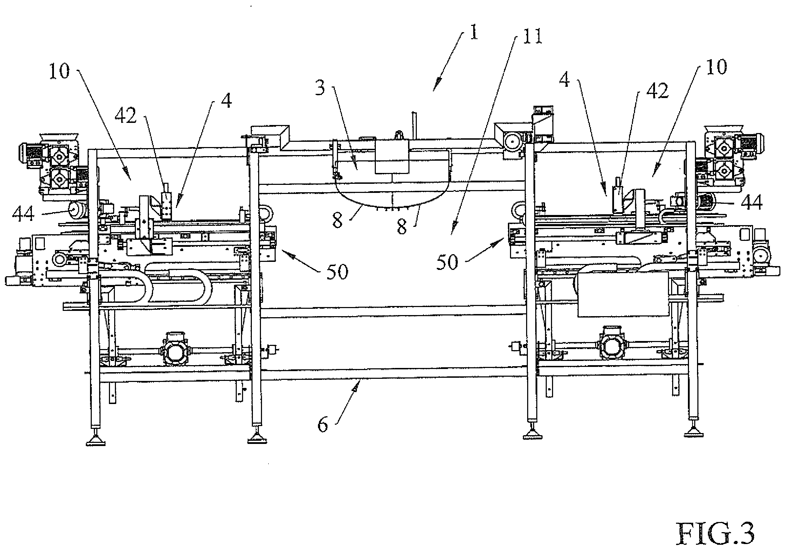

figure 3 shows a front view of the machine;
figure 4 shows a top plan view of the machine;

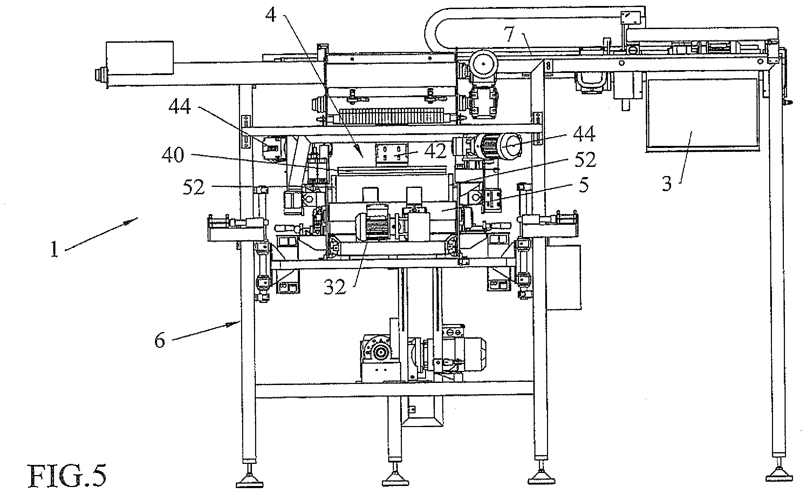

figure 5 shows a side view of the machine;

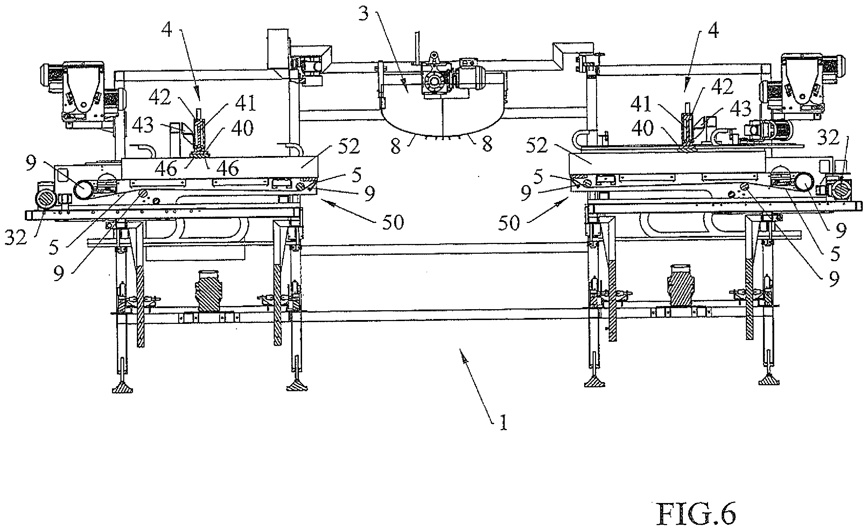

figure 6 shows a section view according to the line VI-VI in figure 4;
figure 7 shows a section view similar to that in figure 6, before unloading the edible block from the hopper:
figure 8 shows a section view similar to that in figure 6, after the unloading of the edible block with the stretching means in a first working position;

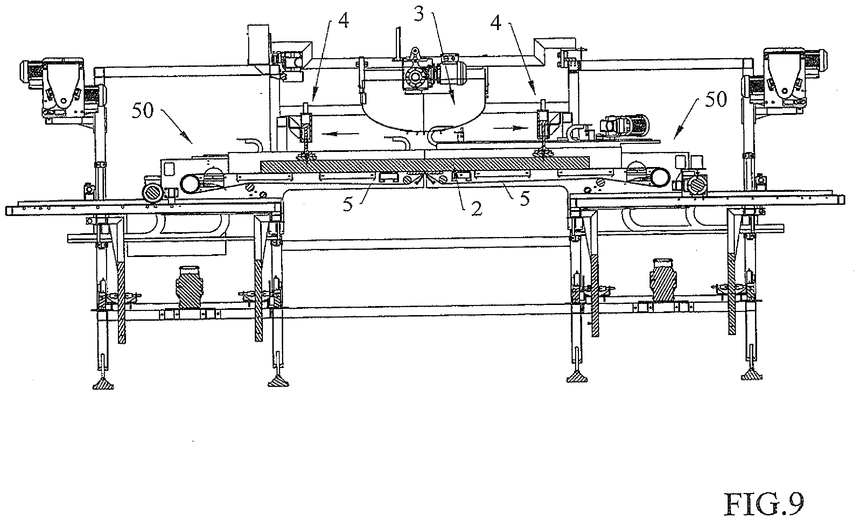

figure 9 shows a section view similar to that in figure 6, with the stretching means in a second working position;
figure 10 shows a section view similar to that in figure 6, with the machine in an unloading position of the stretched block;
figure 11 shows a section view similar to that in figure 6, with the belts being folding the stretched block;
figure 12 shows a side view of the conveyor belt of the folded block partially overlapping a previously unloaded folded block;
figure 13 shows a side view of the conveyor belt with two blocks joined to form a single ribbon;
figure 14 shows a side view of the conveyor belt with three blocks joined to form a single ribbon.

A machine 1 for folding an edible kneading 2 comprises a hopper 3 for loading the fermented kneading 2, two stretching pushers 4 and two supporting and folding assemblies 50 comprising moving belts 5 kept under tension by belt tensioner rollers 9, and containment walls 52 for the edible kneading 2.

Every pusher 4 comprises a contact element 40 with the kneading 2 which lays substantially horizontal being supported by a piston 41 vertically sliding inside a box 42 integral with an arm 43 horizontally movable by means of a driving motor 44. The contact element 40 can thus move vertically and horizontally, and includes a non flat, lower surface, e.g. with two portions 46 inclined downwards which meet at a vertical median plane; said shape of the lower surface allows improved stretching of the kneading 2, thus avoiding sideways contact of the edge of contact element 40 with the kneading 2.

Instead of said pusher 4, a stretching roller with horizontal rotation axis can be provided, being idly mounted on said arm 43.

A supporting frame 6 includes horizontal guides 7 adapted to allow hopper 3 to horizontally translate from a loading position to an unloading position in which swinging portions 8 open in order to allow the fermented kneading 2 to fall onto the supporting belts 5.

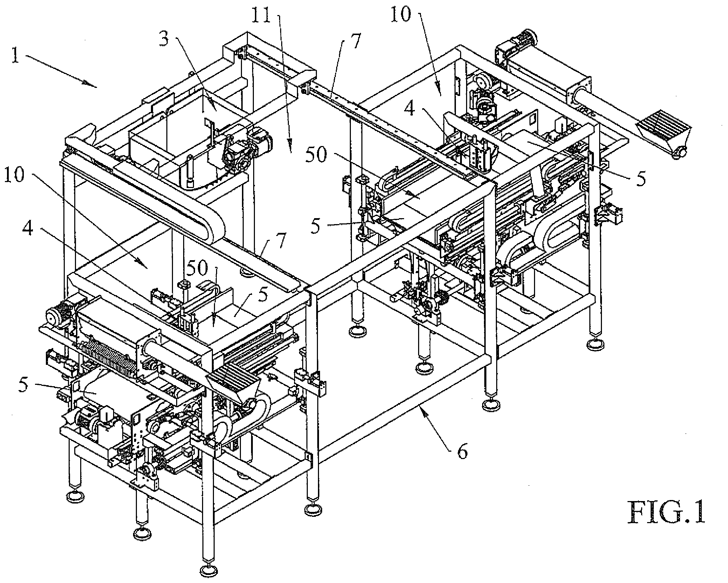

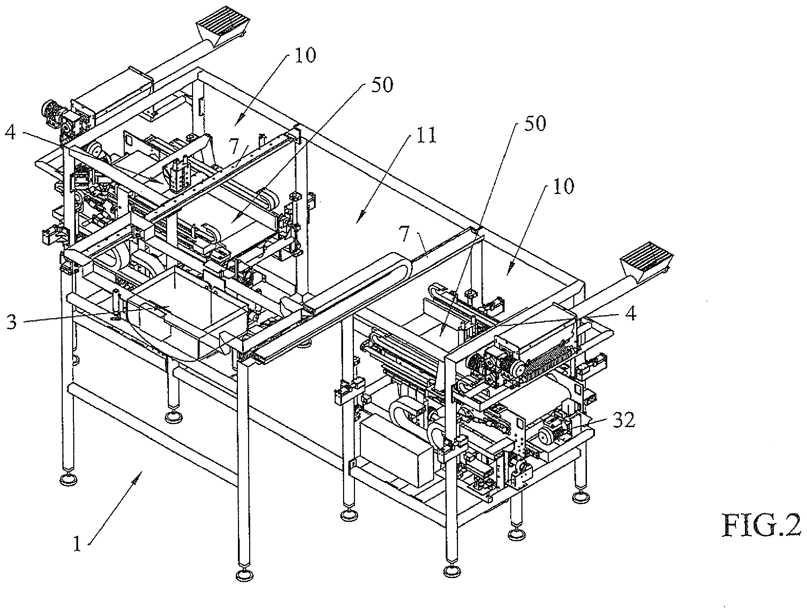

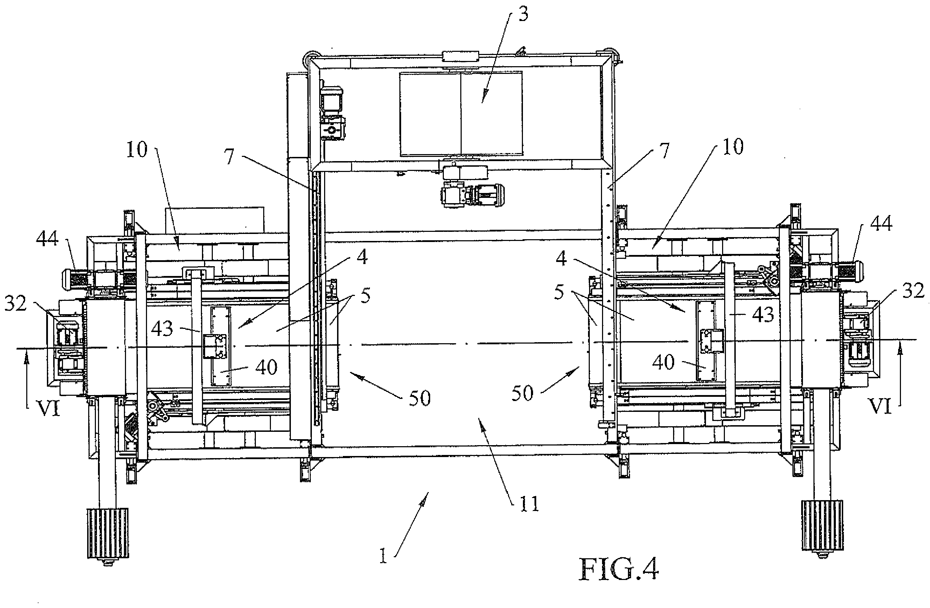

Said supporting and folding means 50 are horizontally movable between a resting position within lateral areas 10 of machine 1, and one or more working positions in the central area 11 of machine 1. The geometry of machine 1 can be clearly seen observing figures 1, 2 and 4, in which the two lateral areas 10 can be recognized, where driving motors 44, 32 for the various movable members are also accommodated, as well as the central area 11, in which the stretching and folding operation object of the present invention takes place.

In the resting position, the stretching pushers 4 as well as the supporting and folding assemblies 50 are substantially accommodated in the lateral areas 10, while they are movable in the central area 11 when working, as will be made clearer below.

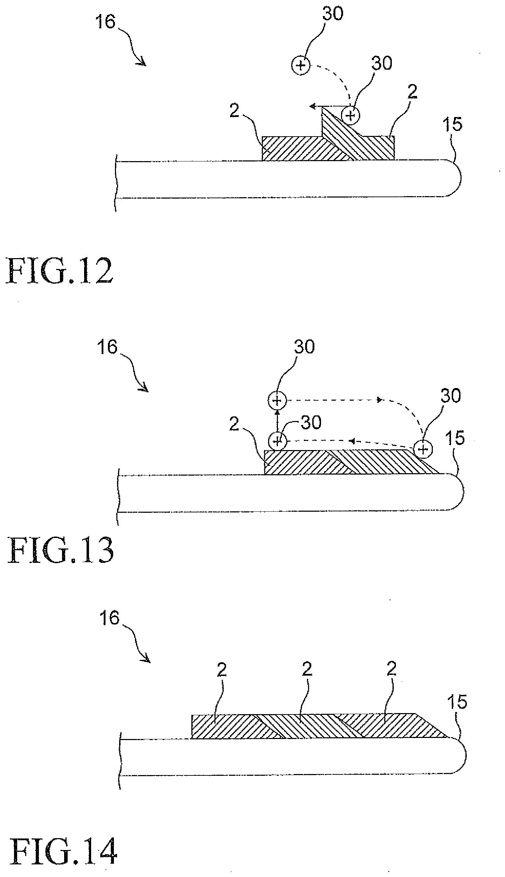

A lower conveyor belt 15 allows the folded kneading 2 to be conveyed towards a joining station 16 of folded kneadings 2 (figures 12-14).

The novel folding process takes place as follows.

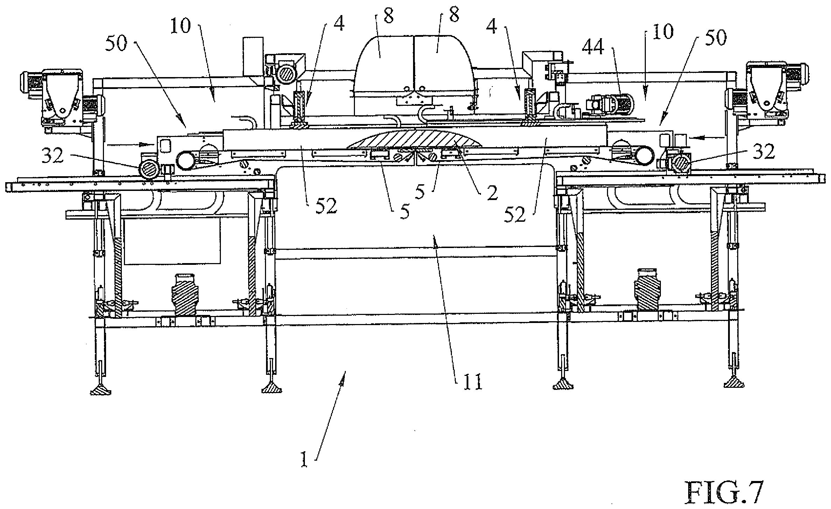

The edible kneading, after about 8 hours of fermentation and with a weight/volume ratio of 0.4-0.5 kg/l, is poured into hopper 3 in the loading position in figure 1. Hopper 3 then translates along guide 7 up to the unloading position above the supporting and stretching assemblies 50, which in the meantime have moved into the configuration of maximum travel in the central area 11 from their accommodation in the lateral areas 10 of machine 1, as can be seen in figure 7 where the swinging elements 8 are in an open position. Once the kneading 2 has been unloaded, it is thus supported by belts 5, the ends 51 of which are adjacent without touching one another.

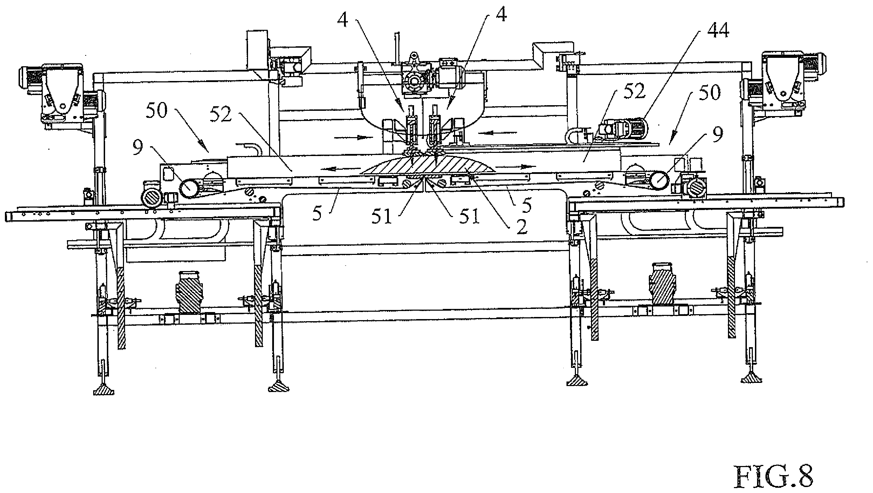

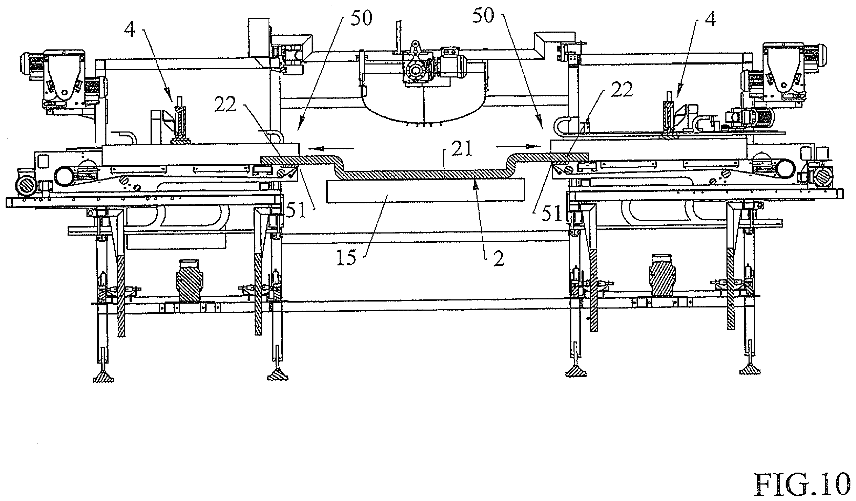

Pushers 4 (figure 8) begin to stretch the kneading 2, which first is in the form of a compact block (figure 7). Having reached satisfactory stretching signalled by suitable sensors (not shown), the assemblies 50 with belts 5 partially retract (figure 10), thus widening the space between the ends 51 thereof, so that a central portion 21 of the stretched kneading 2 can fall by force of gravity onto the conveyor belt 15. In this step, pushers 4 are sealed above the lateral portions 22 of kneading 2.

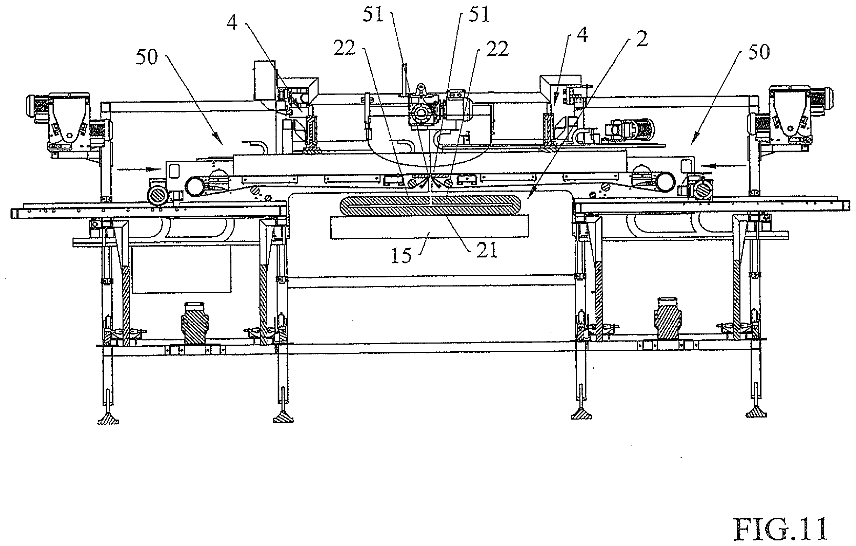

Subsequently, figure 11, pushers 4 release the ends 22 of kneading 2 which, upon the approach of the assemblies 50 with belts 5, fold onto the central portion 21 of kneading 2 already supported on belt 5. Subsequent passages of the assemblies 50 with belts 5 above the kneading 2 promote the flattening of the folded kneading 2.

When kneading 2 falls onto belt 15, it partially overlaps a kneading 2 previously folded according to a shape which is clearly shown in figure 12. Further pushers or rollers 30, in the joining station 16, contribute to flattening the overlapping portions 23 in order to form a single ribbon of edible kneading subject to subsequent lamination or calibration for further improving the leavening.

At the end of the folding process, the specific weight of the edible kneading is about 0.6 kg/l, higher than the initial 0.4-0.5 kg/l but definitely lower than the 0.8-0.9 kg/l at the end of an extrusion procedure.

The folding machine 1 according to the present invention thus allows the leavening of the kneading to be considerably improved and can be inserted in a common industrial bread-making line, limiting fermenting/leavening times.

## Claims

1. Machine (1) for folding an edible kneading (2), comprising a hopper (3) for loading and unloading the edible kneading (2), and a couple of supporting and folding means (5, 50) of the edible kneading (2), said support and folding means being selectably movable horizontally between opposite lateral resting areas (10) and a central working area (11) of the machine (1), **characterized in that** it comprises stretching means (4) and **in that** in said central area (11) the supporting and folding means (5, 50) are suitable to assume a first working position of maximum travel from the lateral rest areas (10) wherein the extremities (51) of said supporting and folding means (5) are adjacent without touching one another to allow the optimal supporting of the kneading (2) still in the form of a compact block, a second working position of partial travel from the lateral rest areas (10) in such a way that a central position (22) of the kneading (2) by now stretched by the stretching means (4) falls by gravity on a lower support (15), and a third position again of maximum travel from the lateral resting areas (10) to consent the bending of the lateral portions (21) on the central portion (22) of the kneading (2).

2. Machine (1) according to claim 1, **characterized in that** said laying and folding means (50) comprise two belts (5) kept in tension by two belt tensioner rollers (9).

3. Machine according to claim 1, **characterized in that** it provides a couple of stretching pushers (4) each of them comprises a contact element (40) with the kneading (2) in substantially horizontal laying supported by a piston (41) vertically sliding inside a box (42) integer with an arm (43) horizontally movable by means of a driving motor (44).

4. Machine (1) according to claim 3, **characterized in that** said contact element (40) provides an inferior surface not flat with two portions (46) inclined towards the bottom which meet in correspondence with a vertical median plane.

5. Machine (1) according to any one of the preceding claims, **characterized in that** it provides a lower conveyor belt (15) suitable to convey the folded kneading (2) towards a joining station (16) of folded kneading (2).

6. Automatic baking process of an edible kneading (2), comprising the fermenting/leavening, the forming and baking, and the folding of the fermented edible kneading (2), **characterized in that** said folding comprises the partial opening of a first horizontal supporting plane (5, 50) of the kneading (2) with the consequent falling of a central portion (22) of the kneading (2) on a second horizontal support plane below (15) while the lateral portions (21) of the kneading (2) stay tight on said first plane (5), the folding and supporting of said lateral portions (21) on said central portion (22) following the at least partial closure of said first horizontal support plane (5, 50).

## Patentansprüche

1. Maschine (1) zum Falten eines essbaren Teigs (2), die einen Trichter (3) zum Hineingeben und Herausnehmen des essbaren Teigs (2) und ein Paar von Stütz- und Faltmitteln (5, 50) für den essbaren Teig (2) umfasst, wobei die Stütz- und Faltmittel wahlweise horizontal beweglich sind zwischen gegenüberliegenden seitlichen Auflagebereichen (10) und einem zentralen Arbeitsbereich (11) der Maschine (1), **dadurch gekennzeichnet, dass** sie Reckmittel (4) umfasst, und dadurch, dass in dem zentralen Bereich (11) die Stütz- und Knetmittel (5, 50) geeignet sind, eine erste Arbeitsposition maximaler Bewegung von den seitlichen Auflagebereichen (10) einzunehmen, wobei die äußeren Enden (51) der Stütz- und Faltmittel (5) aneinander angrenzen, ohne sich zu berühren, um die optimale Auflage des Teigs (2) zu ermöglichen, der noch in Form eines kompakten Blocks vorliegt, eine zweite Arbeitsposition partieller Bewegung von den seitlichen Auflagebereichen (10) derart, dass eine zentrale Position (22) des Teigs (2), der nun von den Reckmitteln (4) gereckt wurde, durch die Schwerkraft auf einen unteren Träger (15) fällt, und eine dritte Position, erneut maximaler Bewegung, von den seitlichen Auflagebereichen (10), um das Biegen der seitlichen Teile (21) auf dem zentralen Bereich (22) des Teigs (2) zu ermöglichen.

2. Maschine (1) gemäß Anspruch 1, **dadurch gekennzeichnet, dass** die Stütz- und Faltmittel (50) zwei Riemen (5) umfassen, die von zwei Riemenspannrollen (9) unter Spannung gehalten werden.

3. Maschine gemäß Anspruch 1, **dadurch gekennzeichnet, dass** sie ein Paar von Reckschiebern (4) bereitstellt, die jeweils ein Kontaktelement (40) mit dem Teig (2) in im Wesentlichen horizontalem Legen umfassen, getragen von einem Kolben (41), der vertikal in einem Kasten (42) gleitet, ganzzahlig mit einem Arm (43), der mit Hilfe eines Antriebsmotors (44) horizontal beweglich ist.

4. Maschine (1) gemäß Anspruch 3, **dadurch gekennzeichnet, dass** das Kontaktelement (40) eine untere, nicht flache Oberfläche hat, mit zwei Abschnitten (46), die zum Boden hin schräg sind, die auf einer vertikalen Medianebene zusammentreffen.

5. Maschine (1) gemäß einem beliebigen der obigen Ansprüche, **dadurch gekennzeichnet, dass** sie ein unteres Förderband (15) bereitstellt, das geeignet ist, den gefalteten Teig (2) zu einer Verbindungsstation (16) für gefalteten Teig (2) zu befördern.

6. Automatisches Backverfahren für einen essbaren Teig (2), das das Fermentieren/Ansäuern, das Formen und Backen und das Falten des fermentierten essbaren Teigs (2) umfasst, **dadurch gekennzeichnet, dass** das Falten das partielle Öffnen einer ersten horizontalen tragenden Ebene (5, 50) des Teigs (2) umfasst, mit daraus resultierendem Fallen eines zentralen Teils (22) des Teigs (2) auf eine zweite horizontale tragende Ebene (15) darunter, während die seitlichen Abschnitte (21) des Teigs (2) dicht auf der ersten Ebene (5) bleiben, wobei das Falten und Tragen der seitlichen Abschnitte (21) des zentralen Teils (22) auf das zumindest partielle Schließen der ersten horizontalen tragenden Ebene (5, 50) folgt.

## Revendications

1. Machine (1) pour plier une pâte pétrie comestible (2), comprenant :
une trémie (3) pour charger et décharger la pâte pétrie comestible (2), et un couple de moyens de support et de pliage (5, 50) de la pâte pétrie comestible (2), lesdits moyens de support et de pliage étant sélectivement horizontalement mobiles entre des zones d'appui latérales opposées (10) et une zone de travail centrale (11) de la machine (1), **caractérisée en ce qu'**elle comprend des moyens d'étirement (4) et **en ce que**, dans ladite zone centrale (11), les moyens de support et de pliage (5, 50) sont appropriés pour adopter une première position de travail de déplacement maximum à partir des zones d'appui latérales (10), dans laquelle les extrémités (51) desdits moyens de support de pliage (5) sont adjacents sans se toucher pour permettre le support optimal de la pâte pétrie (2) encore sous la forme d'un bloc compact, une deuxième position de travail de déplacement partiel à partir des zones d'appui latérales (10) de sorte qu'une position centrale (22) de la pâte pétrie (2) maintenant étirée par les moyens d'étirement (4), tombe par l'action de la gravité, sur un support inférieur (15), et une troisième position à nouveau de déplacement maximum à partir des zones d'appui latérales (10) pour permettre la flexion des parties latérales (21) sur la partie centrale (22) de la pâte pétrie (2).

2. Machine (1) selon la revendication 1, **caractérisée en ce que** lesdits moyens de support et de pliage (50) comprennent deux courroies (5) maintenues en tension par deux rouleaux tendeurs de courroie (9).

3. Machine selon la revendication 1, **caractérisée en ce qu'**elle prévoit un couple de dispositifs de poussée d'étirement (4), dont chacun d'entre eux comprend un élément de contact (40) avec la pâte pétrie (2) dans une disposition sensiblement horizontale supportée par un piston (41) coulissant verticalement à l'intérieur d'une boîte (42) solidaire avec un bras (43) horizontalement mobile au moyen d'un moteur d'entraînement (44).

4. Machine (1) selon la revendication 3, **caractérisée en ce que** ledit élément de contact (40) fournit une surface inférieure non plate avec deux parties (46) inclinées vers le fond, qui se rencontrent en correspondance avec un plan médian vertical.

5. Machine (1) selon l'une quelconque des revendications précédentes, **caractérisée en ce qu'**elle prévoit une courroie transporteuse inférieure (15) appropriée pour transporter la pâte pétrie pliée (2) vers une station d'assemblage (16) de la pâte pétrie pliée (2).

6. Procédé de cuisson automatique d'une pâte pétrie comestible (2), comprenant la fermentation / le levage, le formage et la cuisson, et le pliage de la pâte pétrie comestible (2) fermentée, **caractérisé en ce que** ledit pliage comprend l'ouverture partielle d'un premier plan de support horizontal (5, 50) de la pâte pétrie (2) avec la chute consécutive d'une partie centrale (22) de la pâte pétrie (2) sur un second plan de support horizontal (15) au-dessous, alors que les parties latérales (21) de la pâte pétrie (2) restent étanches sur ledit premier plan (5), le pliage et le support desdites parties latérales (21) sur ladite partie centrale (22) suivant la fermeture au moins partielle dudit premier plan de support horizontal (5, 50).
